# EUROPEAN PATENT SPECIFICATION

(11) **EP 1 205 961 B1**
(45) Date of publication and mention of the grant of the patent: **26.01.2005**
(21) Application number: 01126426.4
(22) Date of filing: 08.11.2001
(51) Int. Cl.: H01J 29/86, H01J 29/89, C03C 17/00, C09D 5/24, G02B 1/11, B05D 1/12, B05D 5/06

(54) **Method of treating surface of face panel used for image display device, and image display device comprising the treated face panel**
Verfahren zur Oberflächenbehandlung der Frontplatte für ein Bildanzeigegerät und Bildanzeigegerät, das die behandelte Frontplatte beinhaltet
Procédé de traitement de la surface du panneau frontal pour un dispositif d'affichage d'image et dispositif d'affichage d'image comprenant le panneau frontal traité

(30) Priority: 09.11.2000 JP 2000341559
(43) Date of publication of application: 15.05.2002
(73) Proprietor: Matsushita Electric Industrial Co., Ltd., Kadoma-shi, Osaka-fu, 571-8501 (JP)
(72) Inventor: Yamamura, Masahiro, Sakai-shi, Osaka 599-8238 (JP); Miura, Yasunori, Takatsuki-shi, Osaka 569-1107 (JP); Suzuki, Atsushi, Kamagaya-shi, Chiba 273-0113 (JP)
(74) Representative: Stippl, Hubert, Dipl.-Ing.

(56) References cited:
- EP-A- 0 517 611
- EP-A- 0 940 837
- EP-A- 1 020 891
- JP-A- 7 224 274
- JP-A- 9 235 143
- US-A- 5 291 097
- US-A- 6 086 790

## Description

The present invention relates to a method of forming a coating film on a panel surface by spraying a coating material. More specifically, the present invention relates to a method of surface treatment of face panels used for image display devices such as cathode ray tubes, plasma displays, and liquid crystal displays.

EP-A-0 517 611 discloses a cathode ray tube and a method of forming a nonglare film on a display surface thereof. Said nonglare film is formed on a front panel of the cathode ray tube by spray coating an ethyl silicate solution containing 0.1 - 0.5 wt% of a black dye onto the surface of the front panel at a flow rate of 0.2 - 0.5 ml/sec. In order to reduce roughness of the spray coated layer, the drying rate should be reduced. Ethylene glycol and other glycols (except their ethers) are recommended to adjust the drying rate.

EP-A-0 940 837 teaches spray coating for building up functional layers on a color cathode ray tube. It describes the use of ethers of ethylene glycol as a component which imparts viscosity to the spray coating solution.

EP-A-1 020 891 describes a low-transmission transparent layered structure utilizing a relatively high amount of propylene glycol monomethyl ether (30% by weight) in a coating composition which further contains ethanol, isopropanol and water and which is preferably applied by spin coating. Adding ethylene glycol to this composition is not suggested.

US-A-6 086 790 is directed to a transparent conductive film and composition for forming the same. It discloses a number of solvent systems which comprise either propylene glycol monomethyl ether or ethylene glycol but no combination of the same. The disclosed compositions are preferably applied by spin-coating.

For typical image display devices such as cathode ray tubes, liquid crystal displays and plasma display panels, films having functions such as an antistatic property and antireflection to external light are formed on face panels of image display devices.

For forming an antireflection film having an antistatic property, a method called 'spray-coating' has been used in general. In this method, a coating material comprising microparticles (generally, having an average particle diameter from 0.01 µm to 0.1 µm) such as antimony doped tin oxide (ATU) and tin doped indium oxide (ITO) and solids such as silica is sprayed on a face panel surface of an image display device. Then, the coating material is dried and sintered.

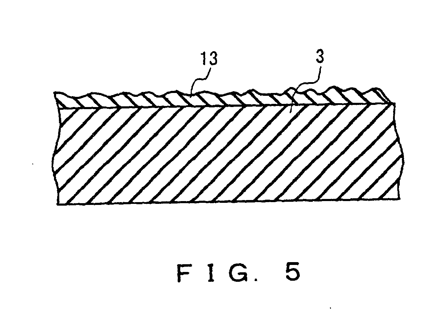

In this method, fine irregularities will be formed easily when the coating material hits the substrate surface. FIG. 5 shows a film 13 formed having such irregularities. Since the film 13 scatters reflected light and gradates the reflected image, it is effective in decreasing reflection, and thus, such films have been used for image display devices of computer monitors or the like.

In addition, spray-coating can be effective in producing films at a low cost by using relatively simple equipment.

However, such an image display device provided with fine irregularities on the face panel has not been preferred recently in spite of its effects in decreasing reflection, since the fine irregularities of the film tend to gradate the displayed image so that images cannot have superior resolution. In addition, the film reflects and scatters external light so that the entire face panel appears to be whitened and cloudy, which will deteriorate the image contrast. A face panel surface will be further irregular when spray-coating is used for coating a coating material containing electroconductive microparticles for antistatic treatment or microparticles such as pigments for improving the screen contrast.

For the above-described reasons, recently, techniques for forming a coating film with less irregularities have been sought.

Spin-coating is a method of forming a film with less irregularities. This method comprises rotation of a face panel so as to spread and to coat a coating material. However, the spin-coating requires more process steps and complicated equipment. Moreover, the efficiency of material usage deteriorates since an excessive amount of coating material should be prepared for coating the coating material uniformly.

Well-known examples of methods requiring no coating material are chemical vapor deposition (CVD), sputtering, and vacuum evaporation. However, these methods are not sufficiently useful for treating large areas such as image display devices, since the methods require complicated and large-scaled equipment.

In the light of the foregoing, the present invention provides a method of forming a relatively smooth film on a face panel used for an image display device, and the film is made of a coating material comprising microparticles for providing functions such as an antistatic property and antireflection to external light by using a spray coating method that does not require complicated equipment. The thus obtained face panel for an image display device has functions such as antistatic property and antireflection to external light while it provides images with excellent resolution and contrast. The present invention can provide such face panels and image display devices comprising the face panels efficiently at a low cost.

For the purposes, the method of treating a surface of a face panel used for an image display device according to the present invention relates to formation of at least one layer of coating film on the panel surface by spraying a coating material comprising microparticles, and the coating material comprises a solvent comprising ethylene glycol, propylene glycol ether, water and an alcohol having 1-3 carbon atoms. Accordingly, irregularities of the film on the face panel used for an image display device can be decreased.

In the above-mentioned method of surface-treating a face panel used for an image display device, the solvent may comprise 5-10 wt% of ethylene glycol, 30-50 wt% of propylene glycol ether, and 20-30 wt% of water, so that irregularities and stains on the coating film can be prevented.

In the above-mentioned method of surface treatment, the temperature of the outer surface of the panel may be in a range from 50°C to 90°C when the coating material is sprayed.

In the above-mentioned method of surface treatment, a spray pressure at which the coating material hits the panel may be in a range from 0.2 MPa to 0.6 MPa.

In the above-mentioned method of surface treatment, the spray coating is performed by using an air spray device having a spray nozzle for spraying the coating material with compressed air.

In the above-mentioned method of surface treatment, the panel is located at a distance ranging from 150 mm to 220 mm from the spray nozzle and the air is sprayed from the spray nozzle at a pressure ranging from 0.3 MPa to 0.6 MPa. Accordingly, irregularities of the film on the face panel of an image display device can be decreased in a simple manner by using simple equipment.

An image display device produced with the method according to the present invention comprises a face panel subjected to a surface treatment of forming at least one layer of coating film by spraying a coating material on the panel surface, and the coating material comprises a solvent comprising ethylene glycol, propylene glycol ether, water and an alcohol having 1-3 carbon atoms. Accordingly, an image display device comprising the face panel having a surface treated according to the present invention can provide high resolution and contrast.
FIG. 1 is a schematic cross-sectional view to show a panel and a coating film formed in one embodiment of the present invention.
FIG. 2 is a schematic external view to show a cathode ray tube exemplified as an image display device in one embodiment of the present invention.
FIG. 3 is a partial cross-sectional view to show a spray nozzle used in one embodiment of the present invention.
FIG. 4 is a schematic view to show one example of scanning by means of a spray nozzle used in one embodiment of the present invention.
FIG. 5 is a schematic cross-sectional view to show a panel portion and a coating film formed in a conventional technique.

Preferred embodiments according to the present invention are described below.

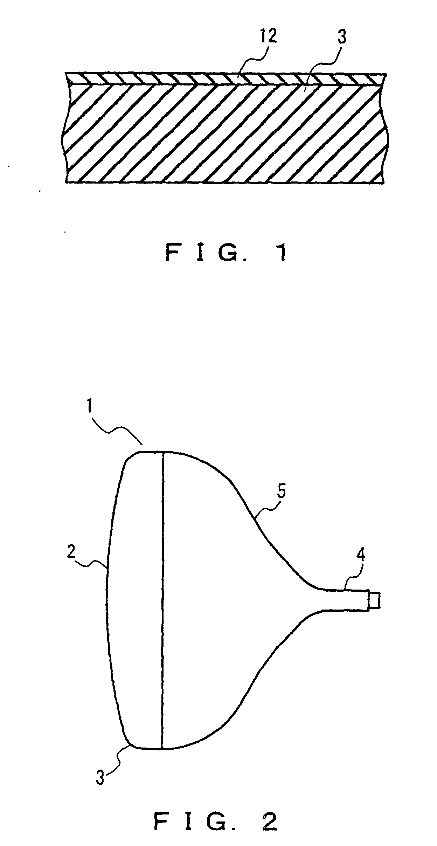

FIG. 2 shows an example of cathode ray tubes used for computer monitors or for television receivers. A cathode ray tube 1 comprises an envelope composed of a face panel 3 and a funnel 5. The face panel 3 has a panel portion 2 provided with a phosphor screen on the inner surface so as to project images. The funnel 5 has a neck portion 4, and an electron gun can be provided in the interior of the neck portion 4. In the interior of the envelope, elements such as a shadow mask are provided. In this embodiment, a film having an antireflection property is formed on the outer surface of the panel portion 2 of the face panel 3.

The following description is about a method of forming a film on an outer surface of the face panel 2 of the cathode ray tube.

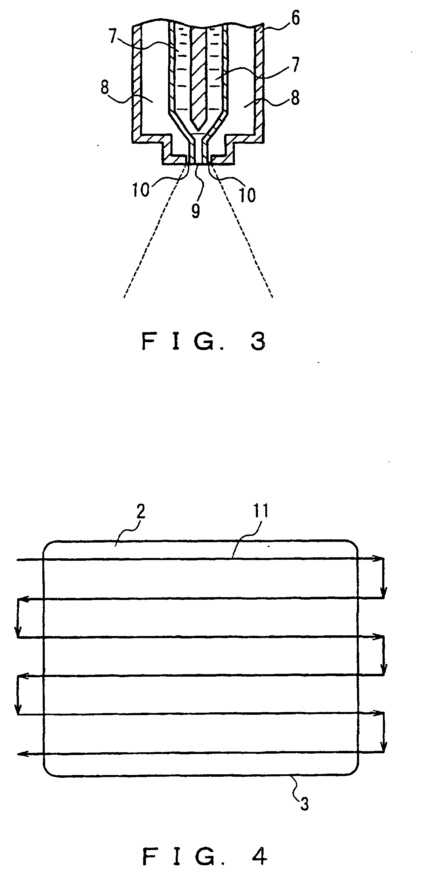

The panel portion 2 is subjected to pre-treatments such as grinding, washing and heating before spraying a given coating material on the outer surface by using a spray device. As shown in FIG. 3, an air spray device has a spray nozzle 6 containing a coating material 7 and air 8, so that the coating material 7 discharged from a coating material discharge opening 9 is atomized by the air 8 blown out under a pressure at an air outlet 10 so as to be sprayed. For uniformly coating the coating material 7 on the whole outer surface of the panel portion 2, the spray nozzle scans the outer surface of the panel portion 2 as indicated with the arrow 11 in FIG. 4.

The coating material contains solids for providing desired coating film thickness or characteristics such as color tones, electroconductivity, and a curing property. The solids may be present in the amount of 1-5 wt%. The solids include carbon black microparticles (average particle diameter is 0.08 µm) as a colorant for improving the contrast, ATO microparticles (average particle diameter is 0.1 µm) as an electroconductive material having an antistatic property, and also a hydrolyzate of ethyl silicate (silica composition) for curing.

The coating material may include a solvent of ethylene glycol in a range from 5 wt% to 10 wt%, propylene glycol ether in a range from 30 wt% to 50 wt%, and water in a range from 20 wt% to 30 wt%. The remainder contained in a range from 10 wt% to 45 wt% in the coating material is an alcohol having 1-3 carbon atoms. Here, the alcohol can be selected from any alcohols having 1-3 carbon atoms, such as ethanol, methanol, and isopropanol. The alcohols can be used alone or as a mixture thereof.

In general, a coating film of a coating material containing microparticles has increased surface area and it dries rapidly, and thus, irregularities of a film surface formed at the moment that the coating material is sprayed on a face panel will remain even after the film is cured. On the other hand, due to its extremely high boiling point of 197°C, ethylene glycol remains in the film for a long time during the drying process and hinders the film from being dried. Moreover, the high surface tension of the ethylene glycol serves to level the fine irregularities formed at the time that the coating material hits the panel portion. The content of the ethylene glycol should be limited to about 10 wt% at most. An excessive amount of ethylene glycol would cause problems such as bright stains due to a significant delay in drying the film.

Examples of the propylene glycol ether include propylene glycol monomethyl ether and propylene glycol monoethyl ether. Among them, propylene glycol monoethyl ether is preferred most since it is more effective in leveling irregularities of a film surface.

For the above-mentioned reason, propylene glycol monoethyl ether is mixed in the coating material. Though a boiling point of propylene glycol monoethyl ether is as relatively high as 133°C, it is not so high as that of ethylene glycol. Therefore, propylene glycol monoethyl ether can be used mainly for controlling drying speed, and it will be blended with ethylene glycol or any other solvents at a proper ratio in order to prevent generation of stains while leveling irregularities of a film surface. Since propylene glycol monoethyl ether prevents the coating material in an atomized state from being dried by the time that the coating material reaches a face panel, the efficiency of applying the coating material at a time of spray-coating can be improved as well. When the content of the propylene glycol monoethyl ether exceeds 50 wt%, drying of the coating film will be delayed considerably and this can cause problems such as irregularities in film coating.

The above-mentioned ingredients, i.e., an alcohol, ethylene glycol, propylene glycol monoethyl ether can be mixed in water and in the respective solvents optionally Furthermore, any of these solvents can be provided easily at a relatively low cost.

Though water has a boiling point not so high as those of ethylene glycol and propylene glycol monoethyl ether, it has a surface tension higher than that of ethylene glycol. Therefore, when blended with other solvents at a proper ratio, water also functions to level fine irregularities formed at a time that the coating material hits the face panel. On the other hand, when the content of water exceeds about 30 wt%, drying of the film is delayed considerably and this will cause problems such as white stains on the film.

The coated coating material is air-dried. During the drying step, solvents having lower boiling points are evaporated preferentially while solvents having higher boiling points remain in the coating material for a long time. Ethylene glycol remains in the coating material for the longest time and takes a sufficient time for leveling the irregularities formed at a time that the coating material sprayed from the spray nozzle hits the face panel. Therefore, as schematically shown in FIG. 1, the film 12 has a smooth surface with less irregularities.

When the thus dried and sintered film has a thickness of about 100 nm, the light transmittance is 70% and the refractive index is about 1.46. Since the refractive index of the film is lower than the refractive index of the face panel of about 1.54, an effect of decreasing reflection can be obtained by interference of light. In this case, spectral reflectance regulated in Japanese Industrial Standard (JIS) R3106 shows a minimum reflectance at a wavelength of 560 nm. The value is about 4.5% for a face panel having no films on the outer surface of the panel portion, while the value is as low as about 2.0% for a face panel having a film on the outer surface of the panel portion. That is, a face panel having a film of the coating material will have an excellent effect in decreasing reflection. The film has a surface resistance of about 1 × 10⁹ Ω/□, which is sufficient for providing an antistatic effect.

Accordingly, the present invention enables the formation of a functional film having a smooth surface with less irregularity by spray-coating with simple equipment.

In a surface treatment according to the present invention, a smooth film surface is obtainable depending on conditions concerning spraying of the coating material as well as conditions concerning coating materials.

For example, when the temperature of the outer surface of the panel portion is excessively low during spray-coating, drying of the coating material is delayed and this can cause faults such as belt-like scanning irregularities and stains. When the temperature of the outer surface of the face panel is excessively high, the coating material will be dried instantly, and insufficient time for leveling the irregularities will be present. A preferable temperature range for the outer surface of the face panel during spray-coating is from 50°C to 90°C.

When the spray pressure for the coating material to hit the panel portion is excessively low, the coating material cannot be atomized sufficiently. As a result, irregularities in the film will be enlarged and the film will be less lustrous. When the spray pressure is excessively high, the coating material is dried rapidly and thus, insufficient time for leveling the irregularities will be present. This will cause film irregularities as well. Preferable spray pressure for the coating material to hit the face panel is in a range from 0.2 MPa to 0.6 MPa.

Another factor is a distance between the spray nozzle and the face panel. When the spray nozzle is located too closely to the face panel, a belt-like scanning irregularity appears on the film. When the spray nozzle is located too far from the face panel, a high percentage of the atomized coating material will be dried before the coating material reaches the face panel. As a result, coating efficiency deteriorates, and an appropriate film thickness cannot be obtained. A preferable distance between the spray nozzle and the face panel is in a range from 150 mm to 220 mm. In this case, a preferable pressure of air sprayed from the nozzle is in a range from 0.3 MPa to 0.6 MPa.

The following description is about surface smoothness of films obtained under given conditions for materials of coating material, though the present invention is not limited to the description.

### (Example 1)

For checking the effects of films obtained according to the present invention, several kinds of coating materials were used for forming films on outer surfaces of panel portions of face panels, and hazes of the thus obtained films were checked and compared. Coating conditions in Example 1 follow.
Face panel temperature: 65°C
Pressure for spraying coating material from a spray nozzle: 0.4 MPa
Discharge amount of coating material: 10 ml/min.
Distance between a face panel and a spray nozzle: 200 mm
Spray nozzle scanning speed: 300 mm/s
Spray nozzle scanning pitch: 12.5 mm
The coating atmosphere had a humidity of 56% at room temperature of 22°C. A spray nozzle used in this example comprises a circular coating material discharge opening having a diameter of 0.5 mm, provided at the periphery of the opening with a toroidal air outlet having an outer diameter of 2.4 mm and an inner diameter of 1.5 mm.

The ratio of ethylene glycol, propylene glycol monoethyl ether and water affects smoothness of the film surface. For examining a difference in the action depending on the ratio, four kinds of coating materials in Tables 1-3 (twelve in total) were coated and air-dried before sintering in a kiln or in an electric furnace at 160°C for 20 minutes so as to check surface smoothness of the obtained films. In this example, an index for comparing the smoothness was haze of the film. For this purpose, haze regulated in JIS K7105 was measured. Visually-recognized irregularities and stains were checked as well. In the tables, EG and PGE denote ethylene glycol and propylene glycol monoethyl ether respectively.

For checking the effects provided by ethylene glycol, four coating materials 1-4 were prepared as shown in Table 1. These coating materials contained propylene glycol monoethyl ether, water and a solid in a fixed ratio while the content of the ethylene glycol was varied to be 0 wt%, 5 wt%, 10 wt%, and 15 wt%. The solid was, for example, a mixture ofATO of 30 wt%, carbon black of 25 wt%, and silica composition of 45 wt%, and the average particle diameter of the components was 90 nm. For the coating materials 1-4, the content of the alcohol was also varied according to the content of the ethylene glycol. The alcohol was a mixture comprising 88 wt% of ethanol and 12 wt% of methanol.

**Table 1**

| Coating material No. | Coating material compositions (wt%) | | | | | Haze (%) | Appearance |
|---|---|---|---|---|---|---|---|
| | EG | PGE | Water | Alcohol | Solid | | |
| 1 | 0 | 40 | 25 | 34 | 1 | 8.2 | Rather cloudy |
| 2 | 5 | 40 | 25 | 29 | 1 | 2.9 | Lustrous |
| 3 | 10 | 40 | 25 | 24 | 1 | 2.6 | Lustrous |
| 4 | 15 | 40 | 25 | 19 | 1 | 2.5 | Irregularities and stains |

In the case of the coating material 1 containing 0 wt% of ethylene glycol, the haze was extremely great as 8.2%, and considerable clouds were recognized visually. For the coating materials 2-4 containing ethylene glycol of 5 wt% or more, the haze was lowered to 3.0% or less and the obtained films became lustrous. However, irregularities and stains were recognized in the coating material 4 containing 15 wt% of ethylene glycol.

Next, for checking the effects provided by propylene glycol monoethyl ether, four coating materials 5-8 were prepared as shown in Table 2. These coating materials contained ethylene glycol, water and a solid in a fixed ratio while the content of the propylene glycol monoethyl ether was varied to be 20 wt%, 30 wt%, 50 wt%, and 60 wt%. For the coating materials 5-8, the content of the alcohol was also varied according to the content of the propylene glycol monoethyl ether.

**Table 2**

| Coating material No. | Coating material compositions (wt%) | | | | | Haze (%) | Appearance |
|---|---|---|---|---|---|---|---|
| | EG | PGE | Water | Alcohol | Solid | | |
| 5 | 5 | 20 | 25 | 49 | 1 | 1.8 | Rather thin film thickness |
| 6 | 5 | 30 | 25 | 39 | 1 | 2.5 | Lustrous |
| 7 | 5 | 50 | 25 | 19 | 1 | 2.6 | Lustrous |
| 8 | 5 | 60 | 25 | 9 | 1 | 2.3 | Irregularities and stains |

The four coating materials 5-8 had small amounts of haze of 3.0% or less. However, in the coating material 5 containing 20 wt% of propylene glycol monoethyl ether, an appropriate film thickness was not obtained due to the degraded coating efficiency, and the obtained film was not provided with the desired characteristics. Lustrous and beautiful films were formed from the coating materials 6 and 7 that contained propylene glycol monoethyl ether of 30 wt% and 50 wt% respectively. A film formed from the coating material 8 containing 60 wt% of propylene glycol monoethyl ether was lustrous while irregularities and stains were recognized.

Next, for checking the effects provided by water, four coating materials 9-12 were prepared as shown in Table 3. These coating materials contained ethylene glycol, propylene glycol monoethyl ether and a solid in a fixed ratio while the content of water was varied to be 10 wt%, 20 wt%, 30 wt%, and 35 wt%. For the coating materials 9-12, the content of the alcohol was also varied according to the content of the water.

**Table 3**

| Coating material No. | Coating material compositions (wt%) | | | | | Haze (%) | Appearance |
|---|---|---|---|---|---|---|---|
| | EG | PGE | Water | Alcohol | Solid | | |
| 9 | 5 | 40 | 10 | 44 | 1 | 4.4 | Rather thin film thickness |
| 10 | 5 | 40 | 20 | 34 | 1 | 3.0 | Lustrous |
| 11 | 5 | 40 | 30 | 24 | 1 | 2.6 | Lustrous |
| 12 | 5 | 40 | 35 | 19 | 1 | 2.3 | Irregularities and stains |

The coating material 9 containing 10 wt% of water was not coated efficiently, and thus, an appropriated film thickness was not provided. Moreover, the haze was raised to some degree. The coating materials 10-12 containing at least 20 wt% of water had less haze and the obtained films were lustrous. However, irregularities and stains were recognized in the film formed from the coating material 12 containing 35 wt% of water.

As described above, smooth and lustrous films free of irregularities or stains can be obtained from a coating material comprising a solvent of a mixture of ethylene glycol, propylene glycol ether, water, and an alcohol having at most three carbon atoms and by restricting the respective contents of the components. A most preferable film can be obtained when the solvent contains 5-10 wt% of ethylene glycol, 30-50 wt% of propylene glycol monoethyl ether, 20-30 wt% of water and 10-45 wt% of a remainder comprises an alcohol, where the solid content is 1-5 wt%.

In this embodiment, propylene glycol monoethyl ether was used for the propylene glycol ether in the solvent. Similar effects will be obtainable by substituting the propylene glycol monoethyl ether by, e.g., propylene glycol monomethyl ether.

In this embodiment, components to be added to the solvent of a coating material are not limited to ethylene glycol, propylene glycol ether, water and an alcohol having 1-3 carbon atoms, but other ingredients such as a leveling agent and a surfactant can be included as well.

Furthermore, the solids in the coating materials of this embodiment are not limited to microparticles of carbon black as a colorant and microparticles of ATO as an electroconductive material, but a dyestuff or a pigment can be used for the colorant, or ITO microparticles can be used for the electroconductive material. The film can be provided with a function of shielding electromagnetic radiation by including in the coating material a material to enhance the electroconductivity of the film, such as a silver-palladium alloy. A preferable average particle diameter of the microparticles included in the coating material is in a range from 0.01 µm to 0.1 µm.

Moreover, the present invention is not limited to a single-layered structure provided by forming directly a film that is surface-treated according to the present invention on an outer surface of a panel portion of a face panel, but the film structure can comprise two or more layers. Such a film having at least two layers can be provided by forming an upper film prepared in any separate method on the film having a surface treated by the method of the present invention, or by forming the film having a surface treated according to the present invention on another film formed in any separate method. When the film formed according to the surface treatment method of the present invention is the lower layer and another film is formed thereon by a separate method, the lower layer is not necessarily cured. Therefore, the lower layer does not necessarily require a silica composition as described in the embodiment.

The film is not limited to that directly formed on an outer surface of a panel portion of a face panel as described in this embodiment. Alternatively, the film can be formed on a separate plate panel or a sheet panel before being adhered to the panel portion of the face panel.

The image display device is not limited to a cathode ray tube as described in this embodiment, but the present invention can be applied to face panels of other image display devices, such as plasma displays, liquid crystal displays, and organic EL displays.

## Claims

1. A method of treating a surface of a face panel used for an image display device, comprising formation of at least one layer of coating film on a panel by spraying a coating material comprising microparticles, wherein
the coating material comprises a solvent comprising ethylene glycol, propylene glycol ether, water, and an alcohol having 1-3 carbon atoms.

2. The method according to claim 1, wherein the solvent in the coating material comprises ethylene glycol in a range from 5 weight % to 10 weight %, propylene glycol ether in a range from 30 weight % to 50 weight %, and water in a range from 20 weight % to 30 weight %.

3. The method according to claim 1, wherein the coating material comprises a solid in a range from 1 weight % to 5 weight %.

4. The method according to claim 1, wherein the microparticles comprise electroconductive microparticles.

5. The method according to claim 1, wherein the microparticles have an average particle diameter ranging from 0.01 µm to 0.1 µm.

6. The method according to claim 1, wherein the surface of the panel has a temperature ranging from 50°C to 90°C when the coating material is sprayed for coating.

7. The method according to claim 1, wherein a pressure at which the sprayed coating material hits the panel ranges from 0.2 MPa to 0.6 MPa.

8. The method according to claim 1, wherein the spray-coating is performed by using an air spray device that comprises a spray nozzle for spraying the coating material with compressed air.

9. The method according to claim 5, wherein the panel is located at a distance ranging from 150 mm to 220 mm from the spray nozzle of the air spray device, and the air is discharged from the spray nozzle at a pressure ranging from 0.3 MPa to 0.6 MPa.

## Patentansprüche

1. Verfahren zum Behandeln einer Oberfläche einer für eine Bilddisplayeinrichtung verwendeten Frontplatte, mit der Ausbildung mindestens einer Schicht aus Beschichtungsfilm auf einer Platte durch Aufsprühen eines Mikroteilchen enthaltenden Beschichtungsmaterials, wobei
das Beschichtungsmaterial ein Lösungsmittel umfaßt, das Ethylenglykol, Propylenglykolether, Wasser und einen Alkohol mit 1-3 Kohlenstoffatomen umfaßt.

2. Verfahren nach Anspruch 1, wobei das Lösungsmittel in dem Beschichtungsmaterial Ethylenglykol im Bereich zwischen 5 Gew.-% und 10 Gew.-%, Propylenglykolether im Bereich zwischen 30 Gew.-% und 50 Gew.-% und Wasser im Bereich zwischen 20 Gew.-% und 30 Gew.-% umfaßt.

3. Verfahren nach Anspruch 1, wobei das Beschichtungsmaterial einen Feststoff im Bereich zwischen 1 Gew.-% und 5 Gew.-% umfaßt.

4. Verfahren nach Anspruch 1, wobei die Mikroteilchen stromleitende Mikroteilchen umfassen.

5. Verfahren nach Anspruch 1, wobei die Mikroteilchen einen mittleren Teilchendurchmesser im Bereich zwischen 0,01 µm und 0,1 µm aufweisen.

6. Verfahren nach Anspruch 1, wobei die Oberfläche der Platte eine Temperatur im Bereich zwischen 50°C und 90°C aufweist, wenn das Beschichtungsmaterial für das Beschichten aufgesprüht wird.

7. Verfahren nach Anspruch 1, wobei der Druck, mit dem das aufgesprühte Beschichtungsmaterial auf die Platte auftrifft, im Bereich zwischen 0,2 MPa und 0,6 MPa liegt.

8. Verfahren nach Anspruch 1, wobei die Sprühbeschichtung unter Verwendung einer Luftsprüheinrichtung vorgenommen wird, die eine Sprühdüse umfaßt, um das Beschichtungsmaterial mit Druckluft aufzusprühen.

9. Verfahren nach Anspruch 5, wobei die Platte in einem Abstand im Bereich zwischen 150 mm und 220 mm von der Sprühdüse der Luftsprüheinrichtung entfernt angeordnet ist und die Luft mit einem Druck im Bereich zwischen 0,3 MPa und 0,6 MPa aus der Sprühdüse austritt.

## Revendications

1. Procédé pour traiter une surface d'un panneau frontal que l'on utilise pour un dispositif d'affichage d'image, comprenant la formation d'au moins une couche de film d'enrobage sur un panneau en pulvérisant un matériau d'enrobage comprenant des microparticules, dans lequel
le matériau d'enrobage comprend un solvant comprenant de l'éthylène glycol, de l'éther de propylène glycol, de l'eau et un alcool ayant de 1 à 3 atomes de carbone.

2. Procédé selon la revendication 1, dans lequel le solvant dans le matériau d'enrobage comprend de l'éthylène glycol dans une fourchette de 5% en poids à 10% en poids, de l'éther de propylène glycol dans une fourchette de 30% en poids à 50% en poids, et de l'eau dans une fourchette de 20% en poids à 30% en poids.

3. Procédé selon la revendication 1, dans lequel le matériau d'enrobage comprend un solide dans une fourchette de 1% en poids à 5% en poids.

4. Procédé selon la revendication 1, dans lequel les microparticules comprennent des microparticules électro-conductrices.

5. Procédé selon la revendication 1, dans lequel les microparticules ont un diamètre moyen de particule dans la fourchette de 0,01 µm à 0,1 µm.

6. Procédé selon la revendication 1, dans lequel la surface du panneau a une température dans la fourchette de 50°C à 90°C lorsque l'on pulvérise le matériau d'enrobage pour l'enrobage.

7. Procédé selon la revendication 1, dans lequel une pression à laquelle le matériau pulvérisé touche le panneau est dans la fourchette de 0,2 MPa à 0,6 MPa.

8. Procédé selon la revendication 1, dans lequel on réalise l'enrobage par pulvérisation au moyen de l'utilisation d'un dispositif de pulvérisation à air qui comprend une buse de pulvérisation pour pulvériser le matériau d'enrobage avec de l'air comprimé.

9. Procédé selon la revendication 5, dans lequel le panneau est placé à une distance dans la fourchette de 150 mm à 200 mm de la buse de pulvérisation du dispositif de pulvérisation par air, et l'air est déchargé depuis la buse de pulvérisation à une pression dans la gamme de 0,3 MPa à 0,6 MPa.
